# EUROPEAN PATENT APPLICATION

(11) **EP 2 077 435 A1**
(43) Date of publication of application: **08.07.2009**
(21) Application number: 08171567.4
(22) Date of filing: 12.12.2008
(51) Int. Cl.: G01C 21/36, G08G 1/0962

(54) **Portable terminal and method for providing network contents using the same**

(30) Priority: 04.01.2008 KR 20080001370
(71) Applicant: LG Electronics Inc., Seoul, 150-721 (KR)
(72) Inventor: Mo, Soon Hee, 153-801 SEOUL (KR); Kim, Seung Hee, 153-801 SEOUL (KR)
(74) Representative: Cabinet Plasseraud

(57) **Abstract**

A portable terminal and a method for providing network contents using the same capable of reproducing multimedia contents are disclosed, wherein the portable terminal uses information of a destination inputted from a user and a pre-stored map data to search for a travel route from a start point to the destination and to guide the travel, receives using a streaming method network contents having a reproduction time corresponding to an estimated transportation time required for the mobile object to reach the destination from the start point and outputs simultaneously the contents.

## Description

The following description relates to a portable terminal, and more particularly to a portable terminal and a method for providing network contents using the same capable of reproducing multimedia contents.

Typically, a portable terminal is a mobile device that has one or more functions such as performing of voice and video call communication, data input/output and data storage.

With such diverse functions, the portable terminal is evolving into a comprehensive multimedia device that can support various operations, such as capturing images or videos, reproducing music or video files, allowing the user to play games and receiving broadcast contents.

In order to implement complex functions, hardware and/or software implementations are being developed. For example, a user interface that allows the user to search for and select various functions is provided.

Furthermore, the portable terminal, being considered as an individual personal belonging for expressing individual personal characters, requires various designs.

Still furthermore, a navigational function using a portable terminal has recently drawn attention due to abrupt changes of road environments and traffic congestions. The navigational function defines positioning techniques known as GPS (global positioning systems) function in which a current position of a mobile object is detected by using navigation messages transmitted by a plurality of GPS satellites and when the current position is detected, the current position is matched to map data and displayed on a display screen of a display unit together with a map, where a user moves the mobile object from a start position to a destination using the map data to guide the mobile object along the detected travel route.

While the mobile object moves using the navigational function of the portable terminal, the user may use the portable terminal to listen to or watch various multimedia contents.

However, the amount of contents storable in advance is limited due to constraint of storage media capacity mounted inside the portable terminal.

As a result, a user is forced to go through a repeated process of frequently downloading the trendy movies or music from the Internet to an external storage medium such as Universal Serial Bus or a memory card and re-storing the contents in the portable terminal. Consequently, the user suffers from a disadvantage of not instantly viewing the latest movies or listening to trendy music during a time desired by the user when the mobile object is moving.

The user suffers another disadvantage in that the user may not use under-reproduction content to its end during the content being reproduced when the user reaches a destination. This disadvantage may give rise to a deprived buying desire with a user if it is expected that the reproduction time of pay contents may exceed the arrival time.

The present disclosure is intended to solve the aforementioned disadvantages and it is an object of the instant disclosure to provide a portable terminal and a method for providing network contents using the same capable of instantly using various contents such as latest movies and music at a desired time while a mobile object is moving.

The present disclosure is to solve the disadvantage of a user being unable to use desired contents due to disaccord between arrival time at a destination and reproduction time of the contents.

Still the present disclosure is to enable a user to watch or listen to all the contents even if an event happens during the contents being reproduced.

Still the present disclosure is to provide a user interface (UI) capable of effectively viewing contents desired by the user while a mobile object is moving.

In one general aspect, a portable terminal comprises: a controller using information of a destination inputted from a user and a pre-stored map data to search for a travel route from a start point to the destination and to guide the travel of a mobile object, whereby the user can be provided with travel guide information; a radio communication unit receiving by streaming method and via a radio communication network a network content having a reproduction time corresponding to an estimated transportation time required for the mobile object to reach the destination from the start point; and an output unit outputting simultaneously the network contents and the travel guide information while the mobile object moves along the travel route.

Implementations of this aspect may include one or more of the following features.

Accordingly, there is an advantage in that the user may instantly view or listen to various contents such as latest movies or music at a desired time while the mobile object moves, and the user may match the arrival time to the destination with the reproduction time of the contents to enhance the satisfaction of contents use.

The output unit preferably includes a display module adapted for visually indicating selection means for selecting the kinds of network contents and deciding whether to reproduce, whereby the user may effectively view or listen to desired contents while being served with the travel guide service according to the user friendly graphic user interface (GUI).

It is preferable that, when a predetermined event happens while a network content is being outputted, a portion to be reproduced be temporarily stored following the time when the event occurred, and the controller output the temporarily stored contents to the output unit once the predetermined event is completed, whereby the user may view or listen to all the contents even if the event occurs during reproduction of the contents by the portable terminal.

It is preferable that, if there is any request of contents change by the user during output of the network contents, the controller measures a remaining transportation time required for the mobile object to arrive from a current position to the destination and receives from a network contents server another network content having a reproduction time corresponding to the remaining required time and outputs the network content through the output unit, whereby the user may selectively view or listen to various network contents in time for the arrival time to the destination.

It is preferable that the controller measures an additional transportation time required for the mobile object to arrive from the current position to the destination when the mobile object has not reached the destination within the expected transportation time, receives another network content having a reproduction time corresponding to the additionally transportation time from the network contents server and output the network content through the output unit. As a result, the user may continuously view the network contents while the mobile object is moving, even if there is generated a disaccord between an actual arrival time to the destination and the estimated transportation time.

The controller may stop the reproduction operation of the network contents currently under reproduction if the mobile object reaches the destination within less than the estimated transportation time, reproduce the not-reproduced portion at a later time and output the portion through the output unit. As a result, the user may successively watch the not-watched portions later relative to the not-watched portion out of the network contents.

The controller may output the network content in PIP (Picture-In-Picture) method or screen-dividing method while the travel guide information is being outputted to the output unit, or audibly or vibrantly output part of the travel guide information while the network contents are being outputted through the output unit. As a result, the user may receive the travel guide during the travelling and watch the network contents at the same time.

It is preferable that the controller outputs through the output unit a list of contents related to the network content that was watched before if the portable terminal is re-connected to a network contents server. As a result, the discomfort may be eliminated for retrieving all the lists provided by the network contents server in order to search for the network contents desired by the user.

The controller may divide an entire travel route to a plurality of sections, receive mutually different network contents for each section and output the contents through the output unit. As a result, the user may select proper network contents relative to mobile means for each section.

There is an advantage in the portable terminal and a method for providing network contents using the same thus explained in that a user may instantly use various contents such as latest movies and music while a mobile object travels at a time desired by the user.

Another advantage is that a user may accord a destination arrival time with a contents reproduction time to allow viewing all the contents desired by the user, thereby enhancing the user contents satisfaction.

Still another advantage is that a user may view all the contents even if there is generated an event while the portable terminal reproduces the contents.

Still further advantage is that a user may effectively view desired contents while receiving a travel guide service according to a provided user friendly Graphic User Interface (GUI).

The above and other features and advantages of the present invention will become more apparent by describing in detail preferred embodiments thereof with reference to the attached drawings.
FIG.1 is a block diagram of a portable terminal related to an exemplary implementation.
FIG. 2 is a front perspective view of a portable terminal according to one exemplary implementation.
FIG. 3 is a rear perspective view of a portable terminal according to one exemplary implementation.
FIG.4 is a network configuration diagram for providing network contents according to an exemplary implementation.
FIGS. 5a and 5b are schematic block diagrams illustrating a process of providing network contents using a portable terminal according to an exemplary implementation.
FIG.6 is a schematic diagram illustrating a screen of a portable terminal on which an entire travel route is shown.
FIG. 7 is a schematic view of a Graphic User Interface (GUI) for selecting mobile means according to an exemplary implementation.
FIGS.8a, 8b and 8c are schematic views of a Graphic User Interface (GUI) for selecting the kinds of network contents according to an exemplary implementation.
FIG.9 is a schematic view of a Graphic User Interface (GUI) for simultaneously providing travel guide information and network contents according to an exemplary implementation.
FIG.10 is a schematic view of a Graphic User Interface (GUI) for selecting the kind of music according to an exemplary implementation.
FIG.11 is a schematic view illustrating a list of broadcasting programs provided according to an exemplary implementation.
FIG.12 is a schematic view illustrating a list of music contents provided according to an exemplary implementation.
FIG.13 is a schematic view of a Graphic User Interface (GUI) for notifying occurrence of an event during reproduction of network contents to an exemplary implementation.
FIG.14 is a schematic view of a Graphic User Interface (GUI) for inquiring whether to view a portion that was not reproduced out of network contents according to an exemplary implementation.
FIG.15 is a schematic view of a screen of a portable terminal on which an entire travel route is divided into a plurality of sections according to an exemplary implementation.

The portable terminal described in the novel inventive concept may refer to a mobile phone, a smart phone, a notebook computer, a digital broadcasting terminal, a PDA (Personal Digital Assistance), a PMP (Portable Multimedia Player) and a GPS navigation device and the like.

Reference will now be made to various implementations, examples of which are illustrated in the accompanying drawings.

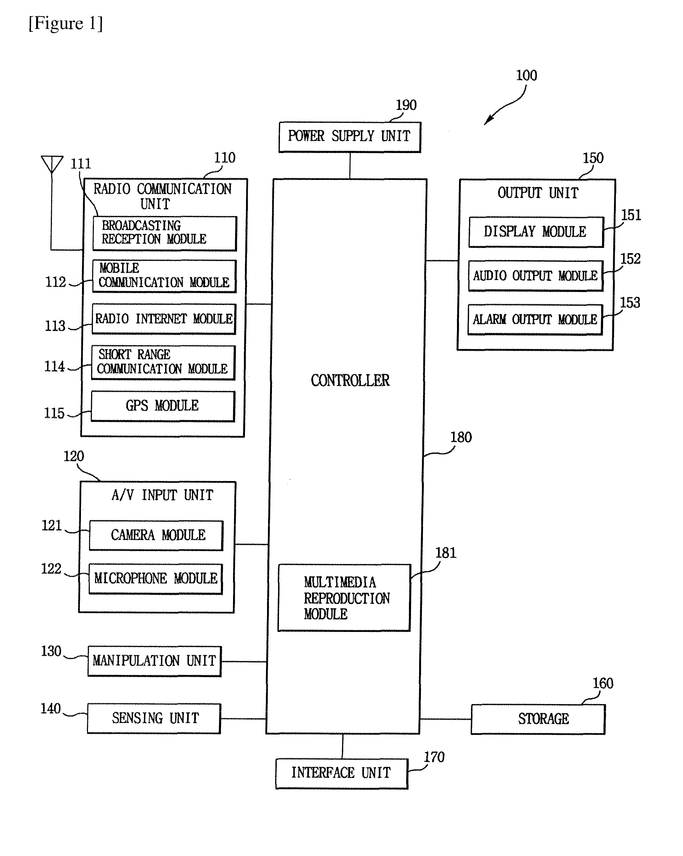

Referring to FIG.1, the portable terminal (100) may include a radio communication unit (110), an A/V (audio/Video) input unit (120), a manipulation unit (130), a sensing unit (140), an output unit (150), storage (160), an interface unit (170), a controller (180), a power supply unit (190), as well as other elements. It should be noted that two or more constitutional elements may be combined in a single element or a single element may be divided into two or more elements when in actual implementation.

Now, these constitutional elements will be sequentially described in detail.

The radio communication unit (110) may include a broadcasting reception module (111), a mobile communication module (112), a radio internet module (113), a short-range communication module (114) and a GPS module (115).

The broadcasting reception module (111) receives broadcasting signal and/or broadcasting related information from an external broadcasting management server (not shown) via a broadcasting channel. The broadcasting channel may include a satellite channel or a terrestrial channel or some other type of communication channel. The broadcasting management server may refer to a server that generates and transmits broadcasting signals and/or broadcasting associated information or a server that receives previously generated broadcasting signals and/or broadcasting associated information and transmits such to a terminal. The broadcasting associated information may refer to information related to a broadcasting channel, a broadcasting program or a broadcasting service provider. The broadcasting signal may include, not only a TV broadcasting signal, a radio broadcasting signal, a data broadcasting signal, but also a broadcasting signal obtained by combining a data broadcasting signal with a TV broadcasting signal or a radio broadcasting signal.

Meanwhile, the broadcasting associated signal may be provided via a mobile communication network, and in such a case, such information may be received by the mobile communication module (112).

The broadcasting associated information may be implemented in various formats. For example, the broadcasting associated information may include an EPG (Electronic Program Guide) of a DMB (Digital Multimedia Broadcasting) format, or an ESG (Electronic Service Guide) of a DVB-H (Digital Video Broadcasting-Handheld) format.

The broadcasting reception module (111) receives broadcasting signals by using various digital broadcasting techniques, and particularly, the digital broadcasting signals can be received by using digital broadcasting techniques, such as DMB-T (Digital Multimedia Broadcasting-Terrestrial), DMB-T (Digital Multimedia Broadcasting-Satellite), MediaFLO (Media Forward Link Only), DVB-H (Digital Video Broadcasting-Handheld) and ISDB-T (Integrated Services Digital Broadcasting-Terrestrial). It should be also noted that the broadcasting reception module (111) may be configured to be suitable for any other broadcasting technique that provides broadcasting signals and information.

The broadcasting signals and/or broadcasting associated information received via the broadcasting reception module (111) may be stored in the storage (160).

The mobile communication module (112) transmits and receives radio signals to and from at least one device out of a base station, an external terminal and a server of a mobile communication network. Here, the radio signals may include voice call signals, video (or conference) communication call signals, data of various formats based on the transmission and reception techniques used, text/multimedia messages and other types of information.

The radio internet module (113) refers to a module that supports a radio access to a network such as internet, and may be installed in the mobile terminal or may be implemented as an internal or external element.

The short range communication module (114) refers to a module that supports short range communications. Suitable technologies for implementing this module may include Bluetooth, RFID (Radio Frequency Identification), IrDA (Infrared Data Association), UWB (Ultra Wideband) and ZigBee. The GPS module (115) receives navigational information from a plurality of satellites.

Meanwhile, the A/V input unit (120) is configured to receive audio signals or video signals and may include a camera module (121) and a microphone module (122). The camera module (121) functions to process image frames such as motionless images or videos (moving images) that are obtained by an image sensor in a video call (or video conference) mode or in an image capture mode. The processed image frames may then be displayed on a display module (151).

The image frames processed by the camera module (121) may be stored in the storage (160) or transmitted to outside via the radio communication unit (110). Two or more camera modules (121) may be provided according to configuration and aspects of the portable terminal.

The microphone module (122) receives an external sound signals from a microphone in a calling mode, a recording mode or a voice recognition mode and processes such into an electrical audio (voice) data. The processed audio data may be converted for output into a format that can be transmittable to a mobile communication base station via the mobile communication module (112) in a calling mode. The microphone module (122) may include various types of noise cancelling algorithms (or other processing mechanisms) to cancel noise generated in the course of receiving the external audio signals.

The manipulation unit (130) may generate key input data based on user inputs to control the operation of the portable terminal. The manipulation unit (130) may be formed as a key pad, a dome switch, a touch pad (e.g., employing touch recognition techniques based on pressure, capacitance, resistance and the like), a jog wheel and a jog dial switch. Particularly, when the touch pad is combined with the display module (151. described later) in a layered structural manner, such may be a touch screen.

The sensing unit (140) senses a current state (or configuration) of the portable terminal (i.e., an opened or closed state), a location (or orientation) of the portable terminal (100), or whether the user has touched certain portion of the portable terminal. Based on such sensing, a sensing signal for controlling the operation of the portable terminal (100) is generated.

For example, if the portable terminal is a slide-type portable terminal, the sensing unit (140) can sense whether a slide portion of the slide type portable terminal is opened or closed with respect to a main body portion of the portable terminal. In addition, the sensing unit (140) can perform a sensing function to detect whether the power supply unit (190) has supplied power or whether the interface unit (170) is connected with an external device.

The interface unit (170) functions to interface with various external devices that can be connected with the portable terminal (100). For example, the external devices may include a wired or wireless headset, an external charger, a wired or wireless data port, a card socket (i.e., for coupling a memory card and a SIM/UIM card), an audio input/output port, a video input/output port, and an earphone. The interface unit (170) may be used to receive data from the external device or be provided with power, such that the received data or power can be delivered to particular elements of the portable terminal (100) or may be used to transmit data and other information from the portable terminal (100) to the external device.

The output unit (150) is configured to provide various types of outputs such as audio signal, a video signal or an alarm signal and may include a display module (151), an audio output module (152) and an alarm output module (153).

The display module (151) serves to output and display information processed by the portable terminal (100). For example, the display module (151) may display a particular UI (User Interface) or GUI (Graphic User Interface) related to the call operation when the portable terminal (100) is in a calling mode. The display module (151) may display a captured and/or received image, or a particular UI and/or GUI when the portable terminal (100) is in a video calling mode or an image capturing mode.

As noted above, if the display module (151) and the touch pad are formed together in a layered manner to constitute a touch screen, the display module (151) may be used as an input device as well as an output device. The display module (151) may include at least one of a liquid crystal display, a thin film transistor-liquid crystal display, an organic light emitting diode, a flexible display and a three-dimensional (3D) display. The display module (151) may include two or more such displays according to particular implementation of the portable terminal (100). For example, the portable terminal (100) may be disposed with external display module (not shown) and internal display modules (not shown) at the same time.

The audio output module (152) outputs audio data that has been received from the radio communication unit (110) in a call signal reception mode, a calling mode, a recording mode, a voice recognition mode or a broadcasting reception mode, or outputs audio data which has been stored in the storage (160). In addition, the audio output module (152) outputs an audio signal related to a function (e.g., a call signal reception sound and a message reception sound) performed by the portable terminal (100). The audio output module (152) may include a speaker and a buzzer.

The alarm output module (153) may output a signal that informs about occurrence of an event of the portable terminal (100). The event occurring in the portable terminal (100) may be, for example, a call signal reception requesting a telephone call, a message reception, a key signal input and an alarm that informs a predetermined time. The alarm output module (153) outputs a signal informing about occurrence of an event in a different format other than an audio signal or a video signal. The alarm unit (153) may output a signal, for example, in the form of vibration. When a call signal or a message is received, the alarm output module (153) may output vibration in order to inform about the received call signal or message. Or when a key signal is received, the alarm unit (153) may output vibrations as a feedback of the inputted key signal. The user can recognize the occurrence of an event via the vibrations. Additionally or alternatively, the occurrence of an event may be informed to the user via the display module (151) and/or the audio output module (152).

The storage (160) may store software programs (or codes, instructions, etc.) used to support the processing and controlling performed by the controller (180) and may perform a function for temporarily storing inputted or outputted data (e.g., a phone book, a message, a still image, or video.).

The storage (160) may include a storage medium of at least one of a flash type memory, a hard disk type memory, a multimedia card, a card type memory (e.g., SD card, XD card, etc.), a RAM and a ROM, just to name a few. In addition, the portable terminal (100) may cooperate with a network storage device capable of performing the storage function of the storage (160) via network access (such as via the Internet).

The storage (160) may be stored with a map data for searching and guiding the travel route of the mobile object if the portable terminal (100) is mounted with a predetermined mobile object. The concept of mobile object may include not only mobile means (passenger car, subway or bicycle) which can be mounted with the portable terminal (100) or into which a user can hand-hold the portable terminal (100) but also a user when the user hand-holds the portable terminal (100) and moves with the portable terminal (100) on the road.

The controller (180) controls the general operations of the portable terminal. For example, the controller (180) performs the controlling and processing associated with handling a voice call, data communication, a video call. In addition, the controller (180) may include a multimedia reproduction module (181) for reproducing multimedia data. The multimedia reproduction module (181) may be formed as a hardware component within the controller (180) or may be formed as a software component separately from the controller (180).

The controller (180) may use the navigational information received from the GPS module (115) to determine a current position of the mobile object, and utilize the map data stored in the storage (16) to search for a travel route from a start point to a destination of the mobile object. The controller (180) may control the display by matching the determined current position of the mobile object to the map data and guide the mobile object along the searched travel route if the mobile object moves along. The controller (180) may control in such a manner that icons for displaying the map, the current position of the mobile object, the travel route and various facilities on the map can be displayed on the display module (151).

At the same time, the controller (180) may control in such a manner that network contents provided from external network contents providing servers (not shown), traffic information providing servers (not shown), broadcasting management servers (not shown) and mobile communication service providing servers (not shown) and traffic information are received via the radio communication unit (110) and outputted to the output unit (150). The controller (180) may control in such a fashion that real-time news bulletins or traffic information provided from the external servers (not shown) are sequentially and flowingly displayed by the sliding method in text format from right to left at a lower end of the display module (151).

The power supply (190) receives external power or internal power and supplies the power required for the operation of various elements under the control of the controller (180).

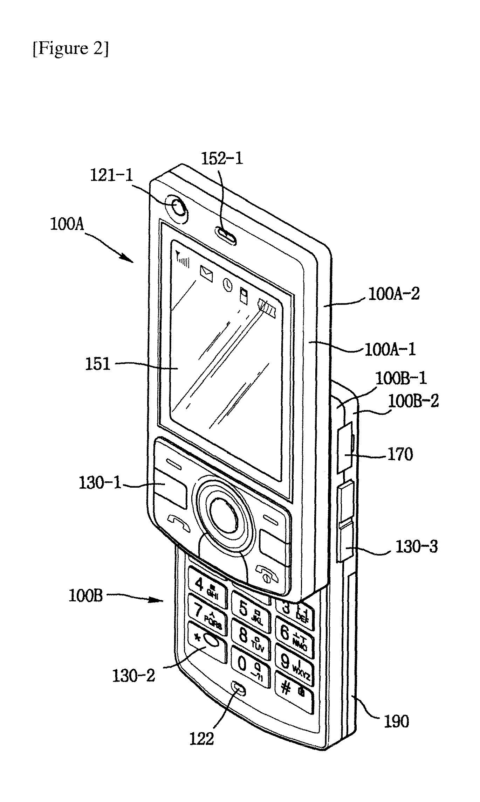

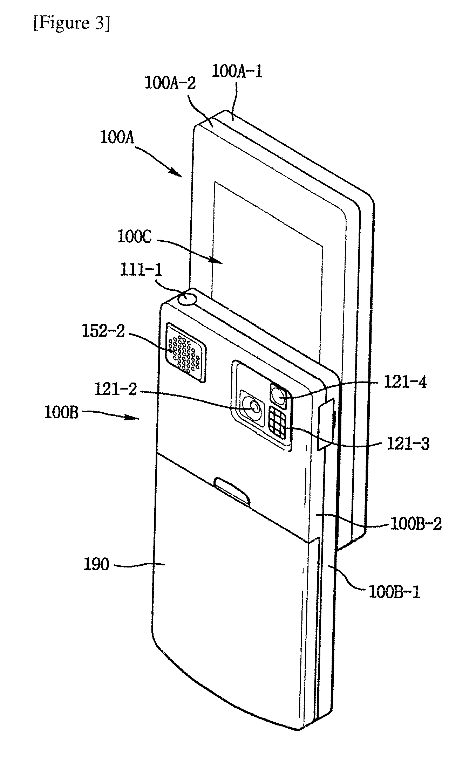

In the above description, the portable terminal according to the present inventive concept has been explained in terms of elements from the perspective of their functions. Hereinafter, the portable terminal according to the present novel concept will be explained in terms of the external elements with reference to FIGS. 2 and 3. For simplicity, the slide-type portable terminal among various types of portable terminals such as a folder type, a bar type, a swing type and a slider type will be referred to for explaining the exemplary implementations. However, it can be clearly understood that the features described herein are not limited to a slide-type portable terminal, but can be applicable to any type of portable terminal.

FIG. 2 is a front perspective view of the mobile terminal according to one exemplary implementation.

The portable terminal (100) includes a first body (100A) and a second body (100B) formed to be slidably moving along at least one direction on the first body (100A).

A state in which the first body (100A) is disposed to overlap with the second body (100B) may be called a closed configuration, and as shown in FIG. 2, a state in which the first body (100A) is moved to expose at least a portion of the second body (100B) may be called an open configuration.

In the closed configuration, the portable terminal operates mainly in a standby mode, and the standby mode may be released according to a user manipulation. In the open configuration, the portable terminal operates mainly in the calling mode, and the operation state may be changed into the standby mode upon lapse of a certain time or according to user manipulation.

The case (a casing, a housing, a cover and the like) constituting an external appearance of the first body (100A) consists of a first front case (100A-1) and a first rear case (100A-2), and various electronic components are installed in a space there between. At least one or more intermediate cases may be additionally disposed between the first front case (100A-1) and the first rear case (100A-2).

The cases may be formed by injection-molding of a synthetic resin or may be made of a metallic material, such as stainless steel (STS) or titanium (Ti).

On the first body (100A) {e.g., substantially on the first front case (100A-1)}, the display module (151), the first audio output module (152-1), the first camera module (121-1) or a first manipulation unit (130-1) may be disposed.

The display module (151) includes an LCD (Liquid Crystal Display), an OLED (Organic Light Emitting Diode), or the like that visually displays information.

A touch pad may be overlaid (overlapped, superimposed, covered) on the display module (151) in a layered manner to allow the display module (151) to operate as a touch screen, whereby the user may input information or commands by touching the display module (151).

The first audio output module (152-1) may be implemented as a receiver or a speaker to output various types of sounds.

The first camera module (121-1) may be suitably implemented for capturing still images, moving images, videos, or other visual information.

The manipulation unit (130-1) receives user commands for controlling network contents reproduction and travel guide operations.

Like the first body (100A), the case constituting the external appearance of the second body (100B) consists of a second front case (100B-1) and a second rear case (100B-2).

A second manipulation unit (130-2) may be disposed on the second body (100B), specifically, on a front face portion of the second front case (100B-1).

A third manipulation unit (130-2), a microphone module (122), and an interface unit (170) may be disposed on at least one of the second front case (100B-1) or the second rear case (100B-2).

The first to third manipulation units (130-1, 130-2, 130-3) may be collectively referred to as the manipulation unit 130, and any means can be employed as the first to third manipulation (130-1, 130-2, 130-3) so long as it can be operated in a tactile manner.

For example, the manipulation unit (130) may be implemented by using one or more dome switches or touch pads that can receive a user command or information according to press or touch operation by the user, or may be implemented by using a mechanical manipulation means, such as a rotatable element (e.g., a wheel, dial, jog button, thumbwheel, etc.) or a linear movement element (e.g., a joystick, lever, knob, etc.).

In terms of functions thereof, the first manipulation unit (130-1) may comprise one or more function keys used for inputting a command such as start, end or scroll, and the second user input unit (130-2) may comprise one or more keypads used for inputting numbers, characters, and symbols.

The third manipulation unit (130-3) may be operated as a so-called hot key for activating a special function of the portable terminal.

The microphone module (122) may be suitably implemented for receiving a voice of the user or other sounds.

The interface unit (170) may be used as a passage (path or link) that allows data to be exchanged with an external device through a wired or wireless medium. For example, the interface unit (170) may be at least one of a connection port used for connection of an ear jack, earphones, and the like, a communication port that supports short-range communications (e.g., an IrDA port, a Bluetooth.TM. port, a wireless LAN port, etc.), and a power supply port used for supplying power to the portable terminal.

The interface unit (170) may include a card socket for receiving or accommodating a card-like medium, such as a SIM (Subscriber Identification Module) card, a UIM (User Identity Module) card and a memory card for storing information.

The power supply unit (190) may be mounted at the side (or edge) portion of the second rear case (100B-2) for use in supplying power to the portable terminal (100). The power supply 190 may be a rechargeable battery, which can be releasably attached with the portable terminal.

FIG. 3 is a rear perspective view of the portable terminal according to one exemplary implementation.

A second camera module (121-2) may be additionally mounted on the rear surface of the second rear case (100B-2) of the second body (100B). The second camera module (121-2) may have an image capture direction which is substantially opposite to that of the first camera module (121-1. see FIG. 1), and may support a different number of pixels when compared to the first camera module (121-1).

For example, preferably, the first camera module (121-1) is used for low resolution (i.e., supporting a relatively small number of pixels) to quickly capture an image (or video) of the user's face for immediate transmission to another party during video conferencing or the like, while the second camera module (121-2) is used for high resolution (i.e., supporting a relatively large number of pixels) in order to capture more detailed (higher quality) images or video which typically do not need to be transmitted immediately.

A flash (121-3) and a mirror (121-4) may be adjacently disposed to the second camera module (121-2). When an image of the subject is captured by the second camera module (121-2), the flash 150 illuminates the subject. The mirror (121-4) allows the user to see himself or herself when he or she wants to capture his or her own image (i.e. perform self-image capturing) by using the second camera module (121-2).

A second audio output module (152-2) may be additionally disposed on the second rear case (100B-2), and may implement a stereophonic function in conjunction with the first audio output module (152-1. See FIG. 2), and may be also used in a speaker phone mode for call communication.

A broadcasting signal reception antenna (111-1) may be disposed at one side of the second rear case (100B-2), in addition to an antenna used for call communication. The antenna (111-1) may be installed such that it can be extended from the second body (100B).

One part of a slide module (100C) that slidably connects the first body (100A) with the second body (100B) may be disposed on the first rear case (100A-2) of the first body (100A). The other part of the slide module (100C) may be disposed on the second front case (100B-1) of the second body (100B), which may not be exposed to the outside as shown in FIG. 3.

In the above description, the second camera module (121-2) and the like are disposed on the second body (100B), but such exemplary configuration is not meant to be limiting.

For example, one or more of the constitutional elements (111-1, 121-2, 121-3, 152-2) which are disposed on the second rear case (100B-2) may be mounted on the first body (100A), mainly, on the first rear case (100A-2). In this case, there is an advantage in that those elements disposed on the first rear case (100A-2) can be protectively covered by the second body (100B) in the closed configuration. In addition, even if a second camera module (121-2) is not separately mounted, the first camera module (121-1) may be configured to rotate to thereby enable an image capturing up to an image capturing direction of the second camera module (121-2).

The portable terminal mounted with the above-mentioned network contents providing functions is not limited to the configurations and methods of the afore-said implementations, but part or all of the afore-said implementations may be selectively combined or configured to take various modifications and alternations.

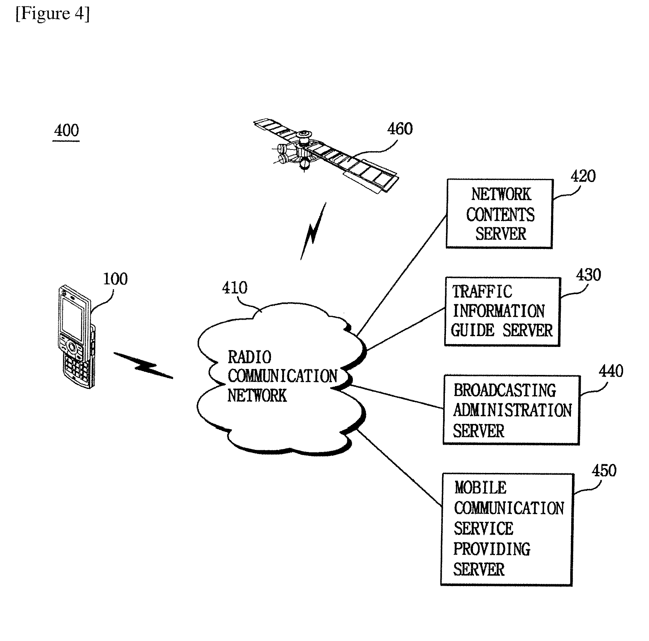

FIG.4 is a network configuration diagram for providing network contents according to an exemplary implementation.

Referring to FIG.4, a network (400) for providing network contents using the portable terminal may include a network contents providing server (420), a traffic information guide server (430), a broadcasting administration server (440), a mobile communication service providing server (450) and a GPS satellite (460), all of which are connected to the portable terminal (100) via the radio communication network (410).

The radio communication network (410) includes all the networks wirelessly connected to the portable terminal (100) that can provide voices, images, broadcasting signals, navigational information and various multimedia. The radio communication network (410) may include a radio internet network, a mobile communication network, a broadcasting communication network and satellite communication network.

The network contents server (420) provides network contents in streaming method to the portable terminal (100) via the radio communication network (410).

The streaming method is a method in which a previously received data is preferentially reproduced when a next predetermined amount of data is received even before one contents file is completely transmitted to the portable terminal (100) of the user while a predetermined amount of data received from the contents file is stored in the storage (160) of the portable terminal (100). There is an advantage in the streaming method in that a variety of network contents can be provided to the user with few influence by the capacity of the storage (160) installed inside the portable terminal (100), as opposed to the download method that reproduces after download of the whole files. There is anther advantage in that reproduction time of the contents file can be shortened to allow a user to be provided with reproduction of the contents in real time, as opposed to the download method.

The network contents include voices, images, broadcasting signals, position information and various multimedia that can be provided to the portable terminal (100) via the radio communication network (410).

The traffic information guide server (430) provides in real time to the user of the portable terminal (100) traffic information relative to the current traffic situation and road situation via the radio communication network (410). The traffic information include all the text information, voice information and image information that may affect the user due to traffic gridlock, traffic accident or road repair while the user moves along the traffic route.

The broadcasting administration server (440) is a server that generates a broadcasting signal and/or broadcasting related information, or receives the thus generated broadcasting signal and/or broadcasting related information and transmits the signal and/or information to the portable terminal (100) via the radio communication network (410).

The radio communication service providing server (450) provides a voice call signal, a video communication call signal or text/multimedia message to the portable terminal (100) via the mobile communication network disposed at the portable terminal (100).

The GPS satellite (460) provides the navigational information to GPS module (115) of the portable terminal (100) via the radio communication network (410).

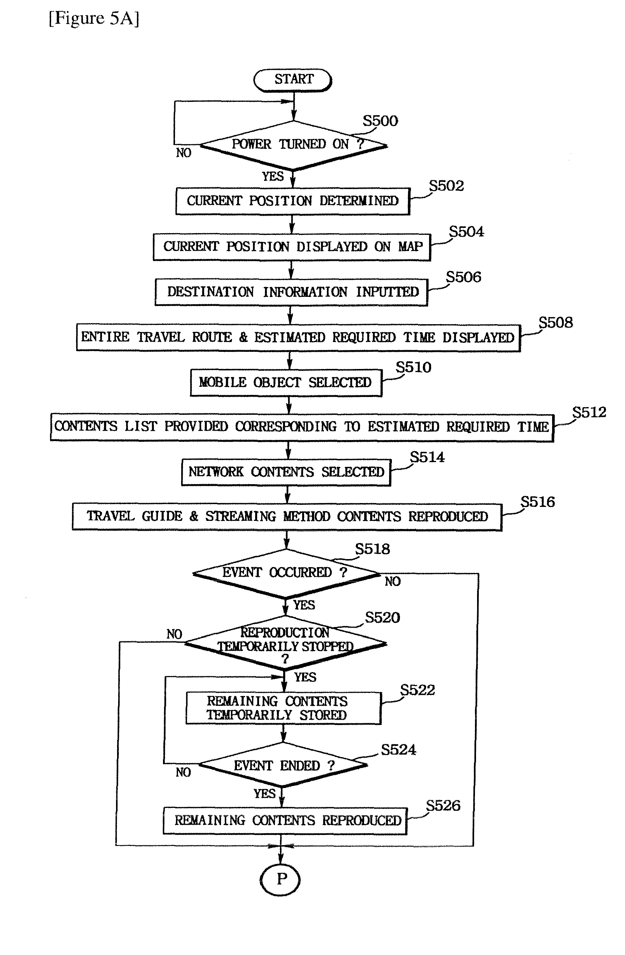

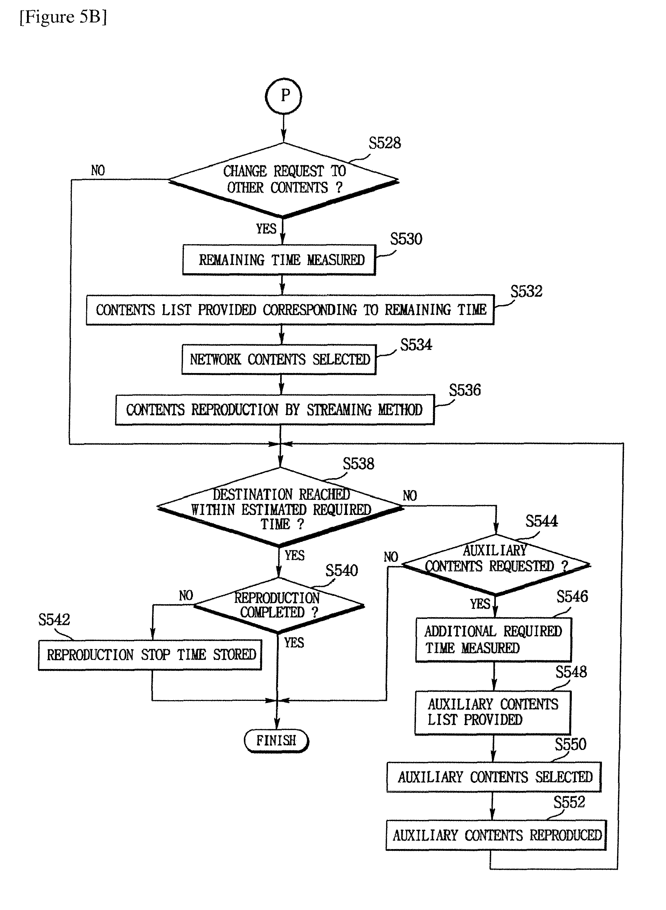

FIGS. 5a and 5b are schematic block diagrams illustrating a process of providing network contents using the portable terminal according to an exemplary implementation.

Referring to FIG.5a, if the power of the portable terminal (100) is turned on (S500), the controller (180) uses the navigational information received by the GPS module (115) to determine the current position of the portable terminal (100) (S502). If the portable terminal (100) is applied to a car navigation system mounted on a mobile object, the controller (180) may detect an accurate position of the portable terminal (100) by a hybrid method using the navigational information received by the GPS module (115) and a travel status detection signal of the mobile object detected by the sensing unit (140).

In other words, the GPS module (115) receives at lease four or more pieces of navigational information transmitted by a plurality of GPS satellites (460) and uses the received navigational information to calculate a DOP (Dilution of Precision) value indicating the reliability of the received navigational information. The DOP value is low if the navigational information is reliable in a current position of the portable terminal (100), but is high if the navigational information is unreliable.

The controller (180) compares the DOP value outputted by the GPS module (115) with a preset critical value to determine the reliability of the navigational information. As a result of the comparison, if there is a reliability, the current position of the portable terminal (100) is detected from the navigational information, and if there is no reliability, the information is used relative to the final position of the portable terminal (100) detected by the navigational information that was reliable, to detect the current position of the portable terminal (100).

When the current position of the portable terminal (100) is determined, the controller (180) reads out a map data of a predetermined area from the storage (160) relative to the determined current position of the portable terminal (100).

The controller (180) outputs the read map data to the display module (151) of the output unit (150) to allow being displayed on a screen, and the determined current position of the portable terminal (100) is matched to the map data to display the current position on the map of the screen (S504). It is preferable that the map is displayed in such a manner that the position of the portable terminal (100) is centrally positioned on the screen.

Under the circumstance, when the user inputs information relative to the destination that is sought for, using the manipulation unit (130) (S506), the controller (180) guides an entire travel route from the current position to the destination on the map displayed on the screen, and moves along the travel route. The controller (180) visually displays selectable kinds of mobile objects on the display module (151) when the mobile object travels along the travel route, and measures an estimated required time of each mobile object and visually displays the time on the display module (151) when respective mobile objects are utilized (S508).

The mobile object may include not only mobile means (passenger car, subway or bicycle) which can be mounted on the portable terminal (100) or into which a user can hand-hold the portable terminal (100) but also a user when the user hand-holds the portable terminal (100) and moves along with the portable terminal (100) on the road.

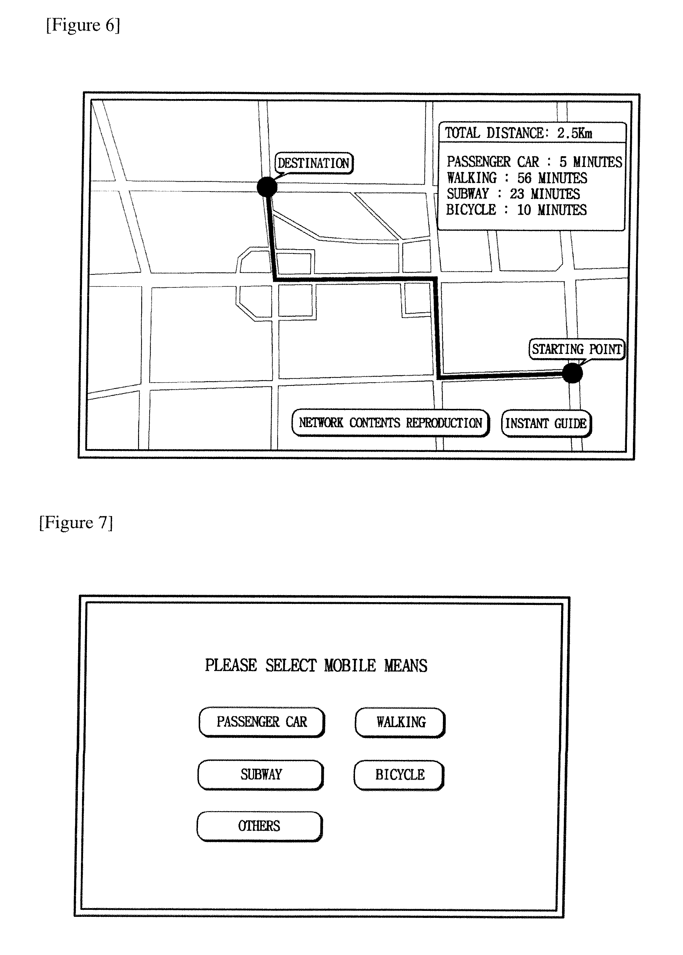

For example, as illustrated in FIG.6, when a user inputs destination information (e.g., building name, company name, address and telephone number), the controller (180) may designate the current position of the portable terminal (100) as a start point of the user, designate a point against the destination information inputted by the user as a destination and display on the map an entire travel route from the start point and the destination. The user may directly use the manipulation unit (130) to designate the start point on the map.

Additionally, the right uppermost end of the screen is displayed with a total distance between the start point and the destination, and an estimated required time to the destination by using a mobile object that is to be selected by the user (e.g., passenger car, walking, subway, bicycle and the like). The lowermost end of the screen is activated with a 'network contents reproduction' button for selecting whether the user wishes to receive the network contents reproduction service according to the instant inventive concept, and an 'instant guide' button for selecting whether the user wishes to receive a travel guide in response to the travel route.

At this time, positions of the distance between the start point and the destination, the estimated required time, the 'network contents reproduction' button and the 'instant guide' button are just exemplified and the positions may be changed accordingly.

As a result, the user may use the manipulation unit (130) to select the 'network contents reproduction' button, thereby receiving and viewing the network contents via the radio communication network, or to select the 'instant guide' button, thereby receiving the travel guide service instantly, instead of viewing the network contents.

Successively, when the user selects the 'network contents reproduction' button, a plurality of selection buttons are provided, as illustrated in FIG.7, on the screen of the display module (151) for selecting a mobile object (e.g., passenger car, walking, subway and bicycle and the like) that can be used by the user for moving from the start point to the destination, and the user uses the selection buttons to select the mobile object intended to be used by the user (S510).

As showed in FIG.7, the controller (180) is configured to allow a user to select a particular selection button following activation of the plurality of selection buttons on the display module (151), the selection buttons may be alternatively displayed by being replaced with a list menu, a grid icon menu arranged in lattice formats or an icon rotation menu.

When the mobile object is selected by the user, the controller (180) uses the radio communication unit (110) to get accessed to the network contents providing server (420) via the radio communication network (410) and to transmit information relative to the estimated required time to the network contents providing server (420). The network contents providing server (420) then provides a list of network contents having a reproduction time corresponding to the estimated required time (S512). In other words, a time required for the user to arrive at the destination is estimated, and a list of network contents viewable by the user is provided in consideration of the estimated required time. The contents list provided to a particular user or a particular person holding the portable terminal (100) may designate the propensity (disposition) of the user in advance, whereby a list appropriate to the propensity of the designated user may preferentially be provided. The provided contents list may be set up in association with week-to-week (weekly) zone basis, time-to-time zone basis and location characteristics relative to the start point and the destination. For example, a list relative to contents characterized by TV programs for each particular week, national holiday-to-national holiday zone basis or commemorative day-to-commemorative day zone basis may be provided in case of classification on the weekly basis. Furthermore, in case of classification on time-to-time zone basis, a list on English learning contents during the rush hour zone may be preferentially provided, or a list on contents distinguished from rush hour time zone and night time zone basis may be provided. Additionally, in case of classification per location zone, a list on contents characterized by the start point and the destination inputted by the user may be preferentially provided. For example, a contents list may be provided that informs information on weather relative to the destination inputted by the user, history and influential persons.

Next, when the user selects particular contents using the manipulation unit (130) (S514), the controller (180) receives the particular network contents by the streaming method from the network contents server (420) located on a remote place via the radio communication unit (110) and reproduces the contents using the multimedia reproduction module (181). The controller (180) uses the display module (151) and the sound output module (152) to output images and voices.

Additionally, the controller (180) outputs the travel guide information for guiding the travel of the mobile object along the travel route via the output unit (150) while the network contents are outputted via the output unit (150) (S516).

As a result, the user may receive the guidance on the travel route and at the same time view the network contents that are appropriate for the estimated required time while travelling along the travel route.

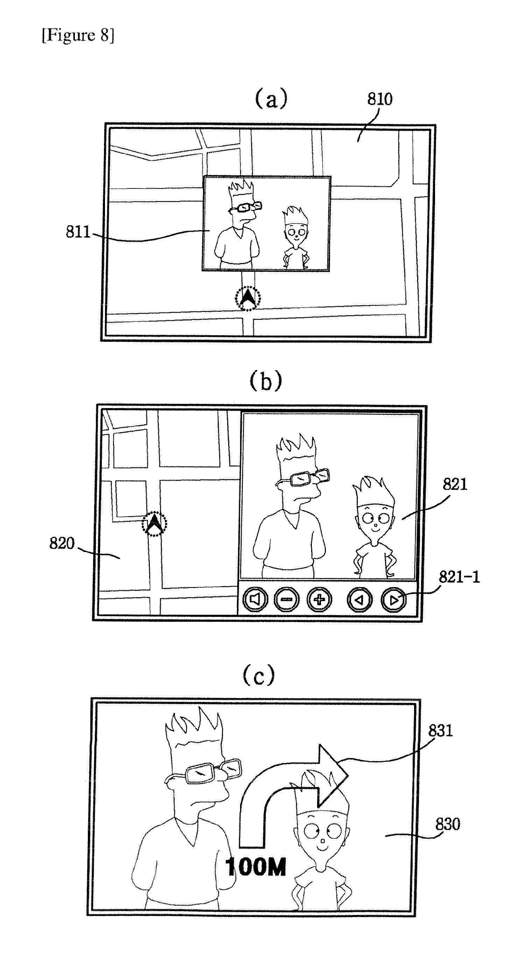

The network contents may be outputted to the travel route guide screen and to the output unit (150) in response to the designation by the user, as illustrated in FIG.8.

For example, as illustrated in FIG.8 (a), a travel route guide image (810) may be outputted to an entire background screen, and a sub-screen (811) may be formed for reproduction of partial section of the background screen by the PIP (Picture In Picture) method. Furthermore, as illustrated in FIG.8 (b), the entire screen may be divided into two screens to allow the travel route guide image (820) to be displayed on one part of the screen and to allow an image (821) on the network contents to be displayed on the other part of the screen.

Preferably, the screen for reproduction of network contents is formed with an audio control key for adjusting the voice relative to the network contents, and functional keys (821-1) such as channel selection key and the like for selecting other contents. As illustrated in FIG.8(c), the user may not be interrupted in viewing the network contents by displaying an image (830) on the network contents on the background screen, displaying by overlapping part of the travel guide information such as an arrow (831) indicating a left turn or a right turn in front of a predetermined distance with the image (830) on the network contents under reproduction, or by notifying the user of part of the travel guide information via sound or vibration.

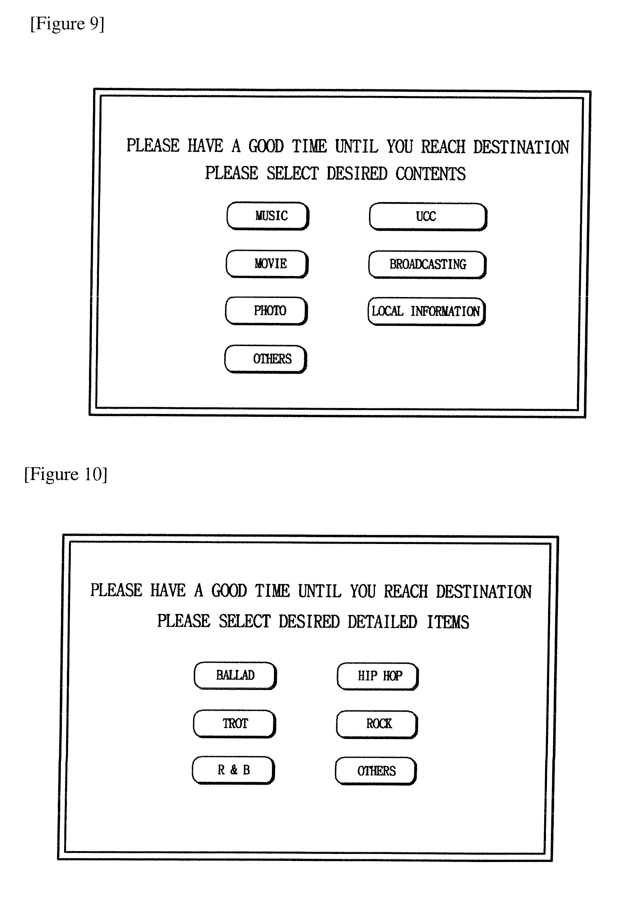

To be more specific, when the user selects 'walking' as a mobile means and selects a 'music' button out of the kinds of network contents {e.g., music, UCC (User Created Contents)}, movie, broadcasting, photograph and local information) as shown in FIG.9, buttons for selecting the kinds of music (e.g., ballad, hip hop, trot, rock and R&B) may be provided as depicted in FIG.10.

If the 'ballad' button is selected out of selection buttons as illustrated in FIG.10, a list may be provided for the 'ballad' music having a reproduction time corresponding to the estimated time required for reaching the destination out of the network contents. The reproduction time corresponding to the estimated required time is a time in which all the reproduction of contents can be completed during a period adjacent to the estimated required time. In other words, the reproduction time refers to a time in which the reproduction can be completed within a predetermined error tolerance from a finish time of the estimated required time.

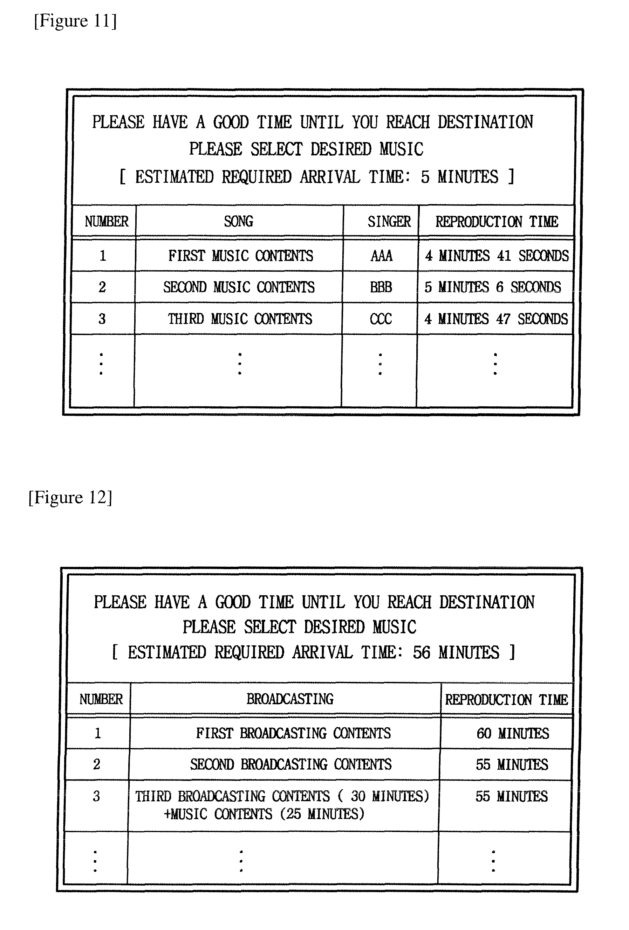

For example, as illustrated in FIG.11, a time required for reproduction of ballad music list and respective music contents and an estimated time required for reaching the destination is displayed on the screen. Consequently, the user may select a music that is desired out of music indicated on the list, thereby allowing listening to the selected music during travel to the destination, and allowing reproduction of the selected music to be completed in time for the time of arrival to the destination.

Now, referring to FIG.12, when the user selects 'walking' as a mobile means, and 'broadcasting' button out of contents kind selection buttons, a list is provided on a broadcasting program having a reproduction time corresponding to the estimated time required for reaching the destination out of network contents. Particularly, if a reproduction time relative to broadcasting contents is shorter than the estimated time required for reaching the destination in the present novel concept, other contents may be provided at the same time that has a reproduction time corresponding to a difference between the estimated required time and the reproduction time of the broadcasting contents. For example, as illustrated in 'number 3' of FIG.12, if a reproduction time relative to 'third broadcasting contents' is 30 minutes, the reproduction time generates a difference of 26 minutes from the estimated time (56 minutes) required for arriving at the destination. As a result, 'music contents' having a reproduction time (25 minutes) corresponding to the time difference (26 minutes) is provided along with the 'third broadcasting contents', whereby the user can enjoy the advantage of continuously viewing the network contents while moving to the destination.

Next, the controller (180) determines whether there has been generated an event including a telephone call request, a short message/multimedia message reception and preset alarm function while the user views the network contents (S518).

As a result of the determination (S518), if it is determined that there is generated a particular event, the controller (180) questions whether the user will temporarily stop the reproduction of the network contents (S520), and continuously reproduces the selected network contents while the event is being processed, if the user does not want the temporary stop.

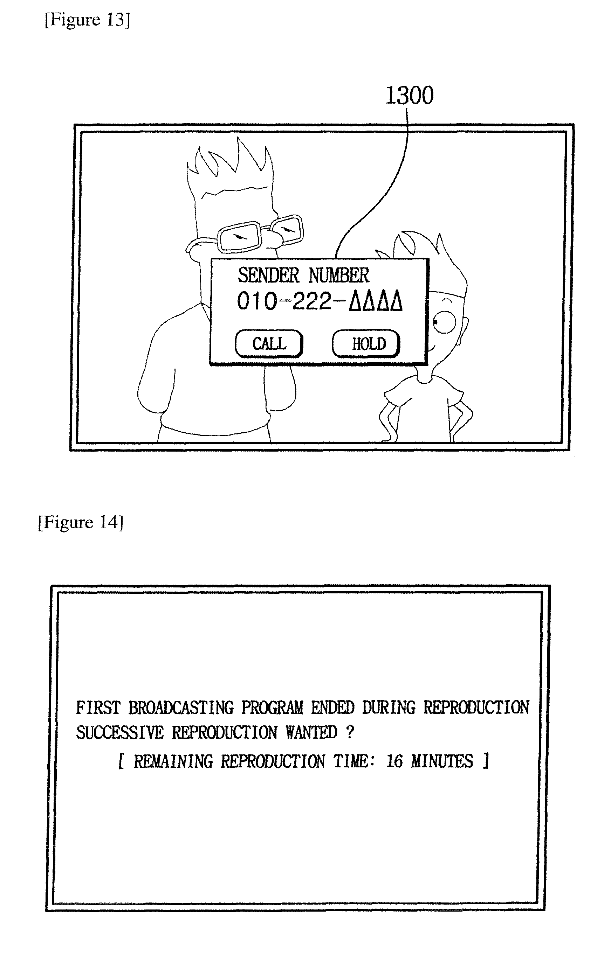

To this end, it is preferable that a display window (1300) be formed on the display module (151) that informs reception of message or request of telephone call, as shown in FIG.13, in order to allow the user to recognize that there was a telephone call request or a message reception while the network is being reproduced. It is also preferable that a 'call' button be formed for selecting to ascertain the message or call with the other party or a 'hold' button be formed for selecting to continuously view the network contents without ascertaining the call or the message.

Meanwhile, as a result of the determination (S520), if it is determined that the user wants a temporary stop of reproduction of the network contents, the controller (180) stops the reproduction of network contents under reproduction, and temporarily stores at the storage (160) the remaining network contents that is not reproduced (S522).

Successively, the controller (180) determines whether the event that has occurred at the step (S518) has ended (S524), and stores (S522) at the storage (160) the network contents continuously received by the streaming method if the event has not ended.

Conversely, as a result of the determination (S524), if it is determined that the event has ended, the controller (180) reproduces the remaining network contents stored in the storage (160) and outputs the contents to the output unit (150) (S526).

Now, referring back to FIG. 5b, the user determines whether the manipulation unit (130) has stopped reproduction of the network contents currently under reproduction and requested reproduction of the other network contents (S528). A s a result of the determination (S528), if it is determined that reproduction of the network contents currently under reproduction has been stopped and the reproduction of the other network contents has been requested, the controller (180) measures (S530) a 'residual time' required for reaching the destination from the current position of the portable terminal (100). Then, the network contents providing server (420) provides the kind of network contents having a reproduction time corresponding to the residual time (S532).

Successively, if the user selects a particular network contents having a reproduction time corresponding to the residual time using the manipulation unit (130) (S534), the controller (180) receives the particular network contents from the remotely-located network contents server (420) via the radio communication unit (110) according to the streaming method, and reproduces the contents using the multimedia reproduction module (181), and outputs the contents in image and voice using the display module (151) and the audio output module (152) (S536).

Next, the controller (180) determines whether the user has arrived at the destination within the estimated required time along the travel route while the network contents are being reproduced (S538).

As a result of the determination (S538), if it is determined that the user has arrived at the destination within the estimated required time, the controller (180) determines whether the selected network contents have been all reproduced (S540). As a result of the determination (S540), if it is determined that the selected network contents have been all reproduced, the controller (180) ends the process.

However, if it is determined at the step (S540) that some portion of the selected network contents has not been reproduced and still remains to be reproduced, the controller (180) stops the reproduction of the network contents and stores a time when the reproduction of the network contents has stopped (S542). The information at the time when the reproduction of network contents was stopped may be stored in the storage (160) inside the portable terminal (100) or in the network contents providing server (420). Thereby, if the portable terminal (100) is turned on at a later time, or a network contents service is newly requested, as shown in FIG. 14, it is preferable that information on the yet-to-be-reproduced network contents and remaining reproduction time be notified to the user, and the user be requested to answer whether to reproduce from the time when the reproduction was stopped, whereby the residual contents may be reproduced according to the user selection.

Furthermore, if it is determined that the user has not reached the destination within the estimated required time as a result of the determination at step S538, the situation is that the reproduction has been completed for the selected network contents at step S514. The case where the user has not arrived at the destination within the estimated required time may occur when the travel time has increased due to, for example, traffic gridlock.

If it is determined as a result of determination at step S538 that the user has not arrived at the destination within the estimated required time, the controller (180) inquires whether to additionally reproduce auxiliary contents during a time when the user arrives at the destination from the current position (S544).

As a result of the determination at S544, if it is determined that the user has not requested to produce the auxiliary contents through the manipulation unit (130), the controller (180) finishes the process. Meanwhile, if it is determined that the user has requested to produce the auxiliary contents, the controller (180) estimates an 'additional time' required for the user to arrive at the destination from the current position (S546), and displays on the display module (151) an auxiliary contents list having a reproduction time corresponding to the additional required time (S548).

Next, when the user uses the manipulation unit (130) to select the auxiliary contents (S550), the controller (180) receives the auxiliary contents from the remotely located network contents server (420) via the radio communication unit (110) according to the streaming method to allow the multimedia reproduction module (181) to reproduce the contents, and outputs the contents in audio and image formats using the display module (151) and the audio output module (152) (S552).

As noted from the foregoing, the user may be instantly provided with various contents, (e.g., latest music or movie) from the network contents providing server (420) at a time desired by the user while the user uses the portable terminal (100) to receive the travel guide.

In addition, the information on the network contents reproduced via the portable terminal (100) is stored in the portable terminal (100) or the network contents providing server (420), whereby contents related to the previously reproduced network contents can be provided to the user to promote the user convenience when the portable terminal (100) is re-connected to the network contents providing server (420) at a later time.

For example, when the user utilizes the portable terminal (100) to get re-connected to the network contents providing server (420) after view of one broadcasting program, the network contents providing server (420) may provide to the portable terminal (100) a sequel to the broadcasting program (portion) previously viewed by the user or a list of the latest broadcasting programs, thereby saving the user the inconvenience of retrieving all the lists in order to search for the broadcasting programs desired by the user.

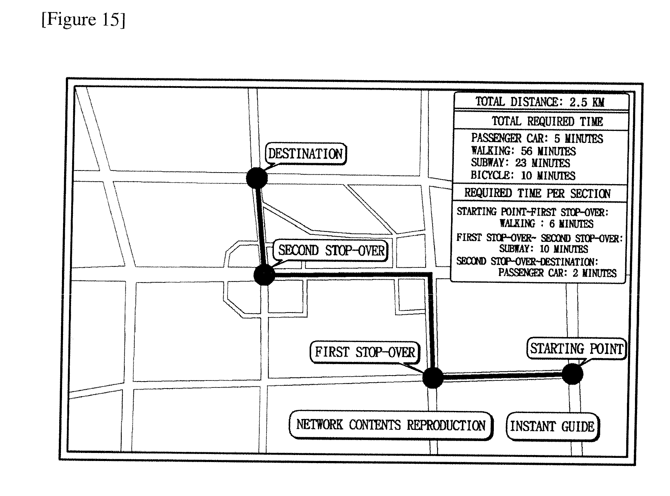

Although exemplary implementations of the present novel concept have been described with respect to cases where one mobile object is used for reaching the destination from the start point, it will be understood that the instant novel concept may be applied to a case where the travel route may be divided into a plurality of sections from the start point to the destination, and different mobile objects are used to travel along the travel route for each section, as shown in FIG.15.

In other words, the controller (180) divides the travel route from the start point to the destination into a plurality of sections, and an estimated time required for each section according to selected kinds of mobile objects and a total estimated required time are measured. The mobile object that is selected may be optimally provided for each section under the control of the controller (180), or the mobile object may be selected by the user input via the manipulation unit (130).

For example, as illustrated in FIG.15, when a distance from a start point to a first stop-over is travelled on foot, a distance between the first stop-over to a second stop-over is travelled by subway, and a distance between the second stop-over to the destination is travelled by a passenger car, the controller (180) may measure an estimated time required for each section, receive from the network contents providing server (420) network contents having a reproduction time corresponding to the total estimated time required for completion of the total travel route and reproduce the contents, and output the contents to the output unit (150).

In addition, the controller (180) may receive from the network contents providing server (420) a plurality of network contents having a reproduction time corresponding to the estimated time required for each section, receive respective network contents each having a reproduction time corresponding to each pertinent section and reproduce the contents, and output the contents to the output unit (150).

In other words, while the user moves on foot from the 'start point to the first stop-over', network contents having a reproduction time corresponding to the estimated time required for moving from the 'start point to the first stop-over' are reproduced, and while the user moves by subway from the 'first stop-over to the second stop-over', network contents having a reproduction time corresponding to the estimated time required for moving from the 'first stop-over to the second stop-over' are reproduced, and while the user moves by passenger car from the 'second stop-over to the destination', network contents having a reproduction time corresponding to the estimated time required for moving from the 'second stop-over to the destination' are reproduced, and the contents are all outputted to the output unit (150).

Finally, it is to be understood that the above-described portable terminal equipped with network contents reproduction capability thus described is not restrictively applied with the configurations and methods of the exemplary implementations, but may be configured by selectively combining the whole or part of each exemplary implementation, such that variations may be made to the implementations

## Claims

1. A portable terminal comprising:
- a controller (180) adapted for
○ using information of a destination inputted from a user and a pre-stored map data to search for a travel route from a start point to the destination;
○ measuring (S508) an estimated transportation time required for a user to reach the destination from the start point using a predetermined mobile object; and
○ providing (S516) travel guide information for guiding the travel of the mobile object along the travel route;
- a radio communication unit (110) adapted for receiving from network content providing servers (420) using a streaming method and via a radio communication network (410), a first content having a reproduction time corresponding to the estimated transportation time; and
- an output unit (150) adapted for outputting (S516) simultaneously the first contents and the travel guide information while the mobile object moves along the travel route.

2. The terminal as claimed in claim 1, wherein the output unit includes a display module (151) adapted for visually displaying selection means for selecting kinds of the first contents and for selecting whether to reproduce.

3. The terminal as claimed in any one of claims 1 and 2, wherein, when an event happens (S528) while the first content is being outputted, the controller is adapted for temporarily storing (S520) a portion of the first content to be reproduced following the time of said predetermined event, and outputting (S526) the portion through the output unit after the predetermined event ends.

4. The terminal as claimed in any one of claims 1 to 3, wherein the controller is adapted for measuring (S538) a remaining transportation time required for the mobile object to arrive from a current position to the destination and, if there is any request (S528) for changing the content by the user while outputting the first content, the controller is further adapted for receiving, using a streaming method and from the network contents providing server a second content having a reproduction time corresponding to the remaining transportation time, and for outputting (S536) the second contents through the output unit.

5. The terminal as claimed in any one of claims 1 to 4, wherein the controller is adapted for measuring (S538) an additional transportation time required for the mobile object to arrive from the current position to the destination and, if the mobile object does not reach the destination within the estimated required time, the controller is further adapted for receiving from the network contents providing server a third content having a reproduction time corresponding to the additional transportation time using a streaming method and for outputting (S552) the third content through the output unit.

6. The terminal as claimed in any of claims 1 to 5, wherein, if the mobile object reaches the destination within less than the estimated transportation time, the controller is adapted for stopping the reproduction operation of the first content and for reproducing the not-reproduced portion of the first content at a later time.

7. The terminal as claimed in any one of claims 1 to 6, wherein the controller is adapted for outputting the first content in PIP (Picture-In-Picture) method or screen-dividing method while the travel guide information is being outputted to the output unit.

8. The terminal as claimed in any one of claims 1 to 7, wherein the controller is adapted for audibly or vibrantly outputting at least part of the travel guide information while the first content is being outputted through the output unit.

9. The terminal as claimed in any one of claims 1 to 8, wherein the controller is adapted for outputting through the output unit a list of contents related to the first content if the portable terminal is re-connected to a network contents providing server after completion of reproduction of the first content.

10. The terminal as claimed in any one of claims 1 to 9, wherein the controller is adapted for dividing an entire travel route into a plurality of sections, for receiving respectively different contents for each section from the network contents providing server and for outputting said different contents through the output unit.

11. A method for providing network contents using a portable terminal comprising:
- using information of a destination inputted from a user and a pre-stored map data to search for a travel route from a start point to the destination;
- measuring (S508) an estimated transportation time required for a user to reach the destination from the start point using a predetermined mobile object; and
- receiving from network contents providing server (420) using a streaming method and via a radio communication network, a first content having a reproduction time corresponding to the estimated transportation time; and
- outputting simultaneously the first content and travel guide information while the mobile object moves along the travel route.

12. The method as claimed in claim 11, further comprising, when an event happens (S528) while the first content is being outputted, temporarily storing (S520) a portion of the first content to be reproduced following the time of the predetermined event, and outputting (S526) the portion through the output unit after the predetermined event ends.

13. The method as claimed in any one of claims 11 and 12, further comprising measuring (S538) a remaining transportation time required for the mobile object to arrive from a current position to the destination and, if there is any request for changing the content by the user while outputting the first content, receiving using a streaming method and from the network contents providing server a second content having a reproduction time corresponding to the remaining transportation time, and outputting (S552) the second contents through the output unit.

14. The method as claimed in any one of claims 11 to 13, further comprising measuring an additional transportation time required for the mobile object to arrive from the current position to the destination and, if the mobile object does not reach the destination within the estimated transportation time, receiving from the network contents providing server a third contents having a reproduction time corresponding to the additional required time using a streaming method and outputting the third contents through the output unit.

15. The method as claimed in any one of claims 11 to 14, further comprising, if the mobile object reaches the destination within less than the estimated transportation time, stopping the reproduction operation of the first content and reproducing the not-reproduced portion of the first content at a later time.
